# EUROPEAN PATENT APPLICATION

(11) **EP 1 026 215 A1**
(43) Date of publication of application: **09.08.2000**
(21) Application number: 99200272.5
(22) Date of filing: 02.02.1999
(51) Int. Cl.: C09J 7/02, G09F 3/02

(54) **Dry peel label laminates and processes of making same**

(71) Applicant: AVERY DENNISON CORPORATION, Pasadena California 91103 (US)
(72) Inventor: Van Driesten, Sjoerd Johannes, 2411 GE Bodegraven (NL); Carretta, Yves, 2396 VV Koudekerk a/d Rijn (NL); de Koning, Henk W.M., 2761 TM Zevenhuizen (NL)
(74) Representative: De Hoop, Eric

(57) **Abstract**

This invention relates to a dry peel label laminate (10) comprising a face layer (1), a dry peel adhesive (9), and a liner layer (5), successively, said dry peel adhesive comprising a PSA layer (2), adjacent to said face layer, and a non-PSA layer (3). When the face layer (1) is removed from the liner layer (5) then the face material as well as the liner material have non-sticky surfaces which are dry to the touch.

Prior art dry peel label laminates are faced with problems concerning the stability of the release force over time and the variety of face materials that can be used.

The advantage of the dry peel label laminate of this invention is that the above problems are solved by (i) using a non-PSA layer containing one or more polymers and/or copolymers, and/or derivatives of these polymers and/or copolymers, having a storage modulus greater than 1 x 10⁸ Pa, and by (ii) using a silicone release coating layer (4), having a specific composition, between the non-PSA layer (3) and the liner layer (5). This dry peel label laminate may generally be used in the manufacturing of dry tags, coupons, hanger labels, collar labels, exhibition or seminar cards, membership cards and business cards.

## Description

The present invention relates to a dry peel label laminate comprising a face layer, a dry peel adhesive and a liner layer, successively, said dry peel adhesive comprising a pressure sensitive adhesive (PSA) layer, adjacent to said face layer, and a non-PSA layer. When the face layer is removed from the liner layer then the face material as well as the liner material have non-sticky surfaces which are dry to the touch.

Such dry peel label laminate may generally be used for the manufacturing of dry tags, coupons, hanger labels, collar labels, exhibition or seminar cards, membership cards and business cards.

The general advantages of dry peel label laminates are the following:
- when dry peel label laminates are used it is possible to convert, i.e. to die cut, the geometry of the face layer into the form of labels, the remaining part of the face layer being known as a matrix, by using label laminate rolls which are better to handle, i.e. in terms of product quality and process speed, than stacks of label laminate sheets;
- after converting it is possible to remove the matrix and to leave the labels on the liner layer which gives the possibility to dispense such labels like e.g. collars to a bottle; and
- the dry peel label laminate may also contain a second liner layer, that is adhered to the first liner layer, by which a so called piggyback construction is formed; such dry peel label laminates may e.g. be used as a coupon in stores to get discounts or as a means for carrying information in a warehouse logistics system.

Making a dry peel label laminate is not easy since (i) a face layer and a liner layer need to be bonded, (ii) the bond between the face layer and the liner layer must not be too tight for peeling of these layers to be effective and (iii) after said peeling, i.e. after delamination, the layers must have non-sticky surfaces which are dry to the touch. In recent years various proposals to solve these difficulties have been made.

US-A 4,863,772 teaches in one embodiment a dry peel label laminate that comprises a face layer, a primer layer, a PSA layer, a polyethylene layer, a liner layer and optionally a silicone release coating layer, successively. The primer layer is used as barrier to prevent staining of the face layer with PSA, i.e. migration of PSA into the face layer. Hot melt PSA is used necessitating the use of high temperatures when applying the PSA layer. The polyethylene layer is relatively thin and is applied by a coextrusion process. A silicone release coating layer may be used in order to make self-wound dry peel label laminates. Upon peeling said dry peel label laminate delamination occurs without disrupture of the liner material, between the polyethylene layer and the liner layer. In a second embodiment of US-A 4,863,772 the order of the PSA layer and the polyethylene layer of the dry peel label laminate is reversed. In both embodiments, the face or liner layer on which the polyethylene layer is coextruded comprises paper.

US-A 4,724,166 discloses the production of dry peel coupons. Said coupons are composed of a first pigmented layer, a face layer (paper), a second pigmented layer, a first varnish layer, a second varnish layer, a PSA layer, a release coating layer and a liner layer (paper), successively. When said coupon is peeled from a product container to which it has first been adhered by the PSA layer delamination occurs between the two varnish layers because these layers are incompatible. When separated both varnish layers have non-sticky surfaces.

GB-2.200.592 relates to a method of temporary fixing of image material on a support by (i) applying a UV-curable adhesive to the support, (ii) laminating the support with the image material and (iii) curing the adhesion with UV-radiation. One may separate the support and image material without leaving a sticky side on either the image material or the support.

In general the dry peel label laminates described above do not have a controllable release force, i.e. the release force may be adjusted to a value comprised within only a small range. Further, these dry peel label laminates do not have a stable release force over time, i.e. a long time after manufacturing of the dry peel label laminate delamination becomes more difficult and upon delamination the revealing surfaces appear to be sticky. In this way the site of delamination changes, i.e. the dry peel adhesive may remain on either the face material or the liner material.

The dry peel label laminate of US-A 4,863,772 is unsatisfactory as regards the restricted choice, i.e. only paper, of either the face layer or the liner layer, i.e. the layer on which the polyethylene layer is applied; the fixed release force upon delamination; the relative high price of the face or liner layers used; and the poor printability of the polyethylene layer.

Another disadvantage of the dry peel laminate of US-A 4,863,772 is the relatively small thickness of the polyethylene layer as a result of which it is hard to effect delamination. Due to this relatively small thickness of the polyethylene layer a relatively thick face layer has to be used.

Still another disadvantage is the relatively low speed of the process by which said dry peel label laminates are made. This is caused by the necessity of applying the PSA layer and the polyethylene layer in two separate process passes. Still another disadvantage is that a primer layer has to be applied between the face layer and the PSA layer.

The aim of the present invention is to provide dry peel label laminates that are constructed in such a way that on peeling a face layer from a liner layer, both layers being separated by a dry peel adhesive, non-sticky surfaces on both layers are revealed by which the problems of the prior art, i.e. the uncontrollability and instability of the release force, the inflexibility with regard to the face material, the impossibility of robust processing and the difficulty of delamination, are solved.

Another aim of the present invention is to provide processes of making said dry peel label laminates.

The present invention provides a dry peel label laminate comprising a face layer, a dry peel adhesive and a liner layer, successively, said dry peel adhesive comprising a PSA layer, adjacent to said face layer, and a non-PSA layer, characterized in that said non-PSA layer contains one or more polymers and/or copolymers, and/or derivatives of said one or more polymers and/or copolymers, the storage modulus E' of which is greater than 1 x 10⁸ Pa at a temperature in the range of 10 to 30°C, and that between said dry peel adhesive and said liner layer a silicone release coating layer is present. Said label laminate is conventionally referred to as a single ply label laminate and it may be used in the manufacturing of e.g. business cards.

It is preferred that said one or more polymers are selected from the group consisting of poly(meth)acrylates, polyesters, polypropylene, polyamides, polyurethanes and vinylic polymers.

It is preferred that said one or more polymers are selected from the group consisting of poly(meth)acrylates, polyurethanes and vinylic polymers.

It is preferred that said one or more polymers comprise poly(meth)acrylates.

It is preferred that said silicone release coating layer has a silicone weight per surface area unit comprised within the range of 0.01 to 1,00 g/m².

It is preferred that said silicone release coating layer comprises a control release agent in a weight per surface area unit up to 100 wt.%, with respect to the silicone weight per surface area unit.

It is preferred that said face layer is made of a material selected from the group consisting of paper and plastic film.

It is preferred that said plastic film is made of a polymer selected from the group of polyolefins and polyesters.

The present invention also provides a dry peel label laminate comprising said face layer, said PSA layer, said non-PSA layer, said silicone release coating layer and said liner layer and further comprising a PSA layer, adjacent to said liner layer, a silicone release coating layer and a liner layer, successively. Said label laminate is conventionally referred to as a double ply label laminate (or piggyback) and it may be used in the manufacturing of e.g. coupons.

In another aspect the present invention relates to a process of making any of said dry peel label laminates comprising application of a non-PSA and application of a PSA, successively, on a silicone release coating layer of a label laminate comprising said silicone release coating layer and said liner layer.

In another aspect the present invention relates to a process of making dry peel label laminates containing poly(meth)acrylates in the non-PSA layer thereof, comprising application of a non-PSA emulsion and application of a PSA emulsion, successively, on a silicone release coating layer of a label laminate comprising said silicone release coating layer and said liner layer.

It is preferred that said non-PSA and said PSA are applied in two steps, wherein said two steps may be mediated by a drying step which may be carried out in an oven. In the present description this process will be referred to as "wet-on-dry process".

It is preferred that said application of the non-PSA emulsion and said application of the PSA emulsion are carried out in one step in one device which may be a dual die. In the present description this process will be referred to as "wet-on-wet process".

It is preferred that the label laminate, comprising said liner layer, said silicone release coating layer, said non-PSA layer and said PSA layer, is laminated with a face layer on said PSA layer.

It is preferred that said lamination with a face material is preceded by a drying step which may be carried out in an oven.

The general advantage of the dry peel label laminate of the present invention is the high controllability of the release force of the dry peel label laminate. This means that the release force may be adjusted to any value comprised within a broad range, rather independent from the dry peel adhesive itself. This is achieved by variation of the composition of the silicone release coating layer.

Another advantage of the dry peel label laminate of the present invention is a stable release force over time. This means that even a long time after manufacturing of the dry peel label laminate it can be delaminated easily to yield two non-sticky surfaces which are dry to the touch. This characteristic is advantageous for stocking the dry peel label laminate on rolls; for printing and/or writing on the dry peel adhesive after delamination of the dry peel label laminate even if plastic film is used as face material, i.e. the printable and/or writable dry peel adhesive remains on the face material; for a high speed and quality of converting of the dry peel label laminates; and even for dispensing of the dry peel label laminates.

Still another advantage of the dry peel label laminate of the present invention is the use, apart from conventional paper face material, of plastic film face material.

Still another advantage is that the dry peel label laminate of the present invention may be made by processes conventionally used for the production of dry peel label laminates having a dry peel adhesive that contains a PSA layer. The same reverse coating technology and drying capacity are used which means that the production speed is as high as in processes by which prior art dry peel label laminates are produced and that the processing is robust.

Still another advantage is that in the processes of making the dry peel label laminates of the present invention no primer layer has to be applied between the face layer and the PSA layer. Still another advantage is that in the embodiment of the present invention wherein the non-PSA layer contains one or more poly(meth)acrylates and/or derivatives thereof, the dry peel label laminate may be made by the wet-on-wet process by which a higher production speed may be achieved than in using the conventional wet-on-dry process.

The present invention will now be described with reference to the accompanying drawings in which:
Fig. 1 is a chart representing the rheological behaviour, i.e. the storage modulus (E') vs. temperature, of two types of non-PSA and one type of PSA which are used in the present invention.
Fig. 2 is a perspective view of a dry peel label laminate of the present invention which is a single ply label laminate;
Fig. 3 is a perspective view of another dry peel label laminate of the present invention which is a double ply label laminate;
Fig. 4 is a flow chart of a process of making the dry peel label laminate of the present invention (wet-on-dry process); and
Fig. 5 is a flow chart of another process of making the dry peel label laminate of the present invention (wet-on-wet process).

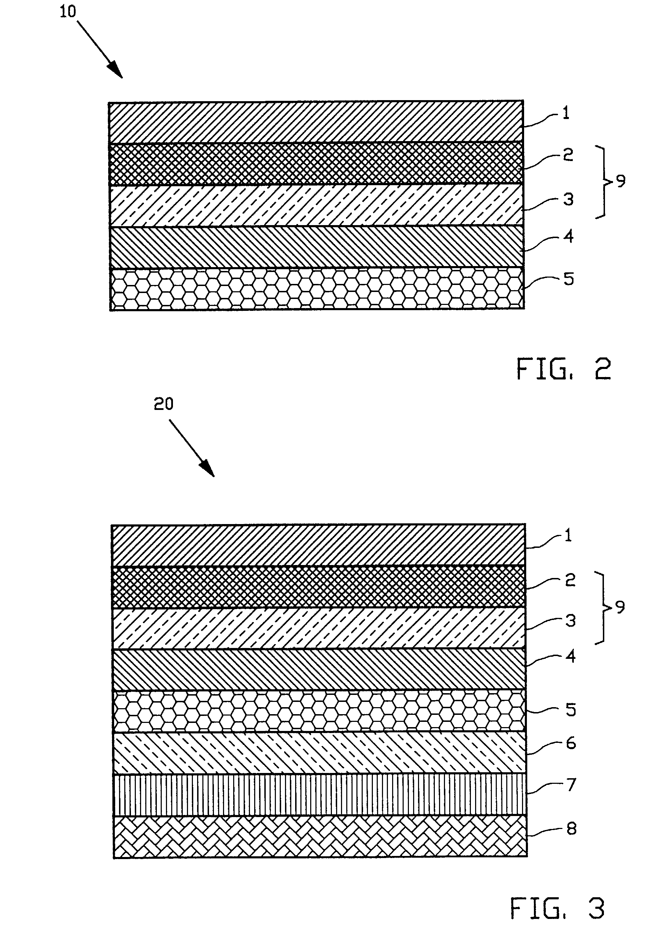

Referring now to the drawings, and to Fig. 2 in particular, there is shown a single ply label laminate **10.**

The dry peel label laminate **10** comprises a face layer 1, a PSA layer **2**, a non-PSA layer **3**, a silicone release coating layer **4** and a liner layer **5**, successively. The PSA and non-PSA layers together form a dry peel adhesive **9**.

Having converted the dry peel label laminate **10**, i.e. having cut the face layer into e.g. business cards, these business cards may be peeled from the dry peel label laminate **10** upon which delamination occurs between the non-PSA layer **3** and the silicone release coating layer **4** resulting in the revealing surfaces of both layers being non-sticky.

The dry peel label laminate 10 of the present invention has the following characteristics.

The non-PSA from the non-PSA layer 3 contains one or more polymers, e.g. poly(meth)acrylates, and/or copolymers, and/or derivatives of these polymers and/or copolymers.

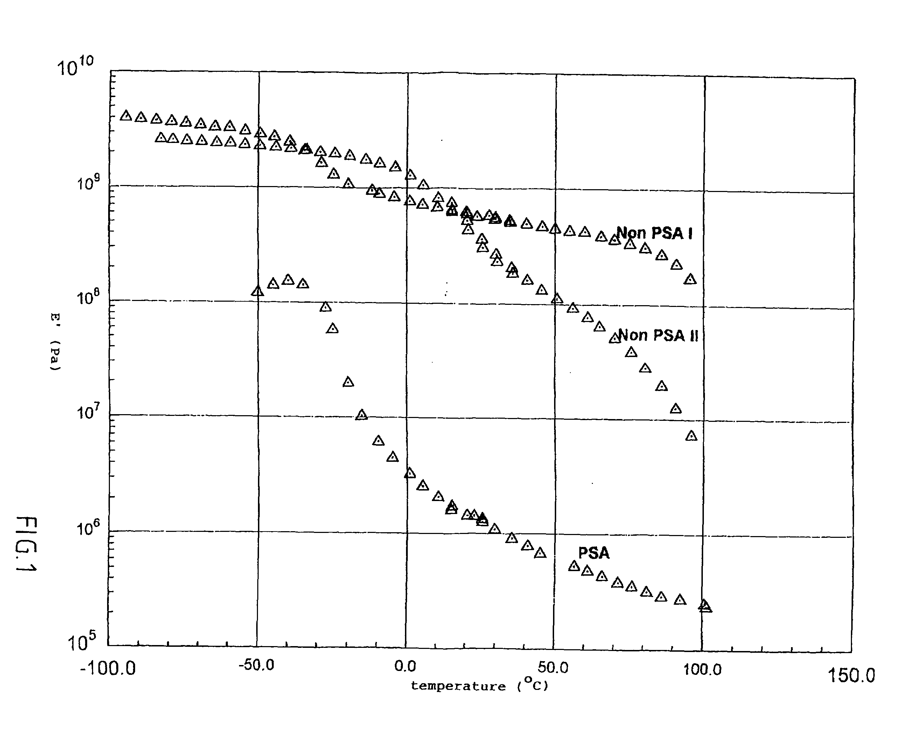

Referring now to Fig. 1, there is shown a chart representing the rheological behaviour, i.e. the storage modulus (E') vs. temperature, of two types of non-PSA and one type of PSA which are used in the present invention and contain poly(meth)acrylates.

The non-PSA used in the present invention has an E' at a use temperature in the range of 10 to 30°C greater than 1 x 10⁸ Pa. In said temperature range the E' of the non-PSA used in the present invention is about 1000 times greater than that of the PSA used in the present invention. Typical values of E' at 23°C for the non-PSA and PSA used in the present invention are 0,5 x 10⁹ (non-PSA I), 0,3 x 10⁹ Pa (non-PSA II) and 1,4 x 10⁶ Pa (PSA).

E' is obtained from a force needed to deform PSA or non-PSA for a very short displacement, this force being temperature dependent. Deformation is effected by using oscillation at a certain frequency. The curvature for the PSA used in the present invention, shown in Fig. 1, fully lies under the curvature for the two types of non-PSA used in the present invention. In order to deform the PSA less time and/or pressure is thus needed as compared to the deformation of the non-PSA. On the basis of the chart in Fig. 1 the rheological behaviour of different types of non-PSA may be predicted. Non-PSA II has a higher temperature dependence than non-PSA I, i.e. at temperatures higher than 30°C non-PSA II will become a little sticky to the touch.

The non-sticking characteristic of the non-PSA used in the present invention may also be characterized by a more practical method which is called the finger pressure test. When, putting a finger at a certain pressure for a certain time, at a use temperature of 10 to 40°C, on the surface of a material to be characterized as either a non-PSA or a PSA, a lower force is needed to pull the finger back, said material may be characterized as a non-PSA.

Polymers and/or copolymers, and/or derivatives of these polymers and/or copolymers, having an E' at a use temperature of 10 to 30°C greater than 1 x 10⁸ Pa may be used as non-PSA in the present invention. Examples of such polymers are poly(meth)acrylates, polyesters, polypropylene, polyamides, polyurethanes and vinylic polymers. An example of such copolymers is an acrylic/ethylenic copolymer.

The non-PSA used in the present invention is conventionally used in the formulation for top coating layers, e.g. flexible packaging and papers, and for binders in paints and inks. The non-PSA may also contain pigments to achieve certain colours and/or a certain gloss. This is e.g. used to increase the opacity of the face material.

Either a water based emulsion of non-PSA or hot melt non-PSA may be used in the application of the non-PSA layer **2**. In the application of the PSA layer **2** either a water based emulsion of PSA or hot melt PSA may be used. An advantage of using PSA and non-PSA emulsions is the good flow property thereof.

The PSA and non-PSA emulsions used in the present invention are commercially available and comprise one or more polymers, preferably poly(meth)acrylates, and/or copolymers, and/or derivatives of these polymers and/or copolymers, auxiliaries and optionally pigments, said constituents being emulsified in water. The PSA and non-PSA emulsions containing one or more poly(meth)acrylates have preferentially the same colour and refraction index. However, the functional groups on and the molecular weights of the poly(meth)acrylates for PSA and non-PSA differ. The auxiliaries contained in the PSA and non-PSA emulsions increase the coating capacity thereof.

In applying the silicone release coating layer **4** the silicones are applied on the liner layer as either 100% solid thermosetting silicones (solventless system) or as silicones mixed with a solvent (solvent based system).

In prior art silicone release coating layers the silicone coatweight, as measured with X-ray, is conventionally 0.8 to 2.0 g/m². However, the silicone release coating layer **4** of the present invention has a silicone coatweight in the range of 0.01 to 1.0 g/m². The silicone coatweight should be kept as low as possible in order to have the non-PSA layer **3** tightly adhered to the PSA layer **2**.

The strength of the bond, i.e. the release force, between the non-PSA layer **3** and the silicone release coating layer **4** should be controllable and be stable. On the one hand this implies that the non-PSA layer **3** bonds with a certain force to the silicone release coating layer **4**. On the other hand this implies that it must still be possible to delaminate the dry peel label laminate upon which said bond will be broken. With respect to this controllable and stable release force two layer interfaces are important.

Firstly, the interface between the PSA layer **2** and the non-PSA layer **3** is important. Secondly, the interface between the non-PSA layer **3** and the silicone release coating layer **4** is important.

As far as the interface between the PSA layer **2** and the non-PSA layer **3** is concerned, these two layers have to remain separate, apart from a very small interface area where they may diffuse into each other. The extent of diffusion depends on the type of process used of making the dry peel label laminates of the present invention and on the chemical affinity of these two layers.

Afore mentioned interface between the PSA layer **2** and the non-PSA layer **3** is less important in terms of the controllability and stability of the release force than the interface between the non-PSA layer **3** and the silicone release coating layer **4** since it is this latter interface where delamination occurs. A controllable release force may be achieved by varying the composition of the silicone release coating layer **4**. A stable release force may be achieved by the mere application of a non-PSA layer as part of the dry peel adhesive **9**.

The composition of the silicone release coating layer **4** is very important for controlling the value of the release force. The silicone release coating layer **4** may or may not comprise a control release agent (CRA). Prior art silicone release coating layers contained CRAs in amounts up to 35 wt.%. However, the silicone release coating layer **4** of the present invention may comprise the CRA in an amount up to 100 wt.%, with respect to the silicone coatweight.

By varying the amount of the CRA the release force of the dry peel label laminate of the present invention may be adjusted to any value in the range of 5 cN/25 mm to 125 cN/25 mm when paper with a weight of 70 g/m² is used as liner material. These release forces are measured at a delamination velocity of 10 m/min and under a delamination angle of 180°.

The release force may also be adjusted to a value lower than 5 cN/25 mm but this is often not very useful. Release forces higher than 125 cN/25 mm are also possible but this is only useful if the face and liner materials do not break when converting, i.e. when stripping of the matrix, or when peeling off the labels. Higher release forces are needed for more bending stiff materials like paper or plastic film at high calipers. A certain release force is needed for converting which highly depends on the type of dies and the face materials used in the process of making the dry peel label laminate and on the production speed of such process.

Selecting the proper type of non-PSA, although to a lesser degree than varying the composition of the silicone release coating layer **4**, also allows one to adjust the release force to a certain value. For different liner materials non-PSAs with different T_{g} are used. For example, in case of plastic film liner material non-PSAs with a relatively high T_{g} and in case of paper liner material non-PSAs with a relatively low T_{g} are used. For developed products the T_{g} varies commonly from -35°C to 50°C.

As mentioned before, using a combination of a PSA layer and a non-PSA layer in stead of solely using a PSA layer advantageously leads to a stable release force, even after accelerated ageing (at a temperature of 70°C for 1 week), because the rheological behaviour of non-PSA is far less time and temperature dependent than that of PSA.

The PSA of the PSA layer **2** ensures a strong permanent bond to the face layer **1** and contains one or more polymers, e.g. poly(meth)acrylates, and/or derivatives thereof. Conventional methods for further increasing this permanent bond, although not necessary for a good release performance of the dry peel label laminate of the present invention, may be used, such as the application of a primer layer between the face layer **1** and the PSA layer **2** or the use of surface treatment, e.g. corona treatment.

Applying a water based PSA emulsion is preferred over applying hot melt PSA. Using an emulsion prevents (i) staining of the face material, (ii) swelling of plastic film when this is used as face material and (iii) loosing of adhesive properties upon exposure to UV light.

The PSA of the PSA layer **2** has a coatweight which is comprised within the range of 1 to 20 g/m² dry weight. The thickness of the PSA layer **2** may be adjusted to the type of face material used. The thickness of the PSA layer **2** and that of the non-PSA layer **3** are preferentially the same, say about 10 micron. In case of relative bending stiff face materials, e.g. paper at high calipers, the PSA coatweight may be greater than 20 g/m² dry weight.

The face layer **1** and the liner layer **5** may be composed of either a conventional material, such as paper, or plastic film, e.g. made of a polyolefin, such as polyethylene and polypropylene, or a polyester.

Referring now to Fig. 3 in particular, there is shown a double ply label laminate **20**.

The dry peel label laminate **20** comprises a face layer **1**, a PSA layer **2**, a non-PSA layer **3**, a silicone release coating layer **4**, a liner layer **5**, these layers being identical to those of the dry peel label laminate **10**, and further comprises a PSA layer **6**, a silicone release coating layer **7** and a liner layer **8**, successively.

Having converted the dry peel label laminate **20**, i.e. having cut the face layer into e.g. coupons, these coupons may be peeled from the dry peel label laminate **20** upon which delamination occurs between the PSA layer **6** and the silicone release coating layer **7** resulting in a sticky revealing surface of the PSA layer **6** and a non-sticky revealing surface of the silicone release coating layer. Then, this coupon may be attached to the outer surface of a product container, e.g. a bottle, by way of the sticky PSA layer **6**. One may peel the coupon from the product container upon which delamination occurs in the same manner as was described for the delamination of the dry peel label laminate **10**.

The release force between the non-PSA layer **3** and the silicone release coating layer **4** is greater than the release force between the PSA layer **6** and the silicone release coating layer **7** so that said coupon can be easily separated from the silicone release coating layer **7** and be attached to a product container.

The dry peel label laminate **10** of the present invention may be made by the wet-on-dry process in which application of the non-PSA layer **3** and application of the PSA layer **2** are performed in two separate steps in two separate coating devices. In using the wet-on-dry process the combinations of hot melt non-PSA and hot melt PSA; hot melt non-PSA and a PSA emulsion; a non-PSA emulsion and hot melt PSA; or a non-PSA emulsion and a PSA emulsion may be used. However, when using non-PSA and PSA emulsions in making the dry peel label laminate **10** of the present invention, the wet-on-wet process may also be used. In the wet-on-wet process, application of the non-PSA layer **3** and application of the PSA layer 2 are performed in one step in one coating device. This substantially increases the production speed of the wet-on-wet process as compared to that of the wet-on-dry process.

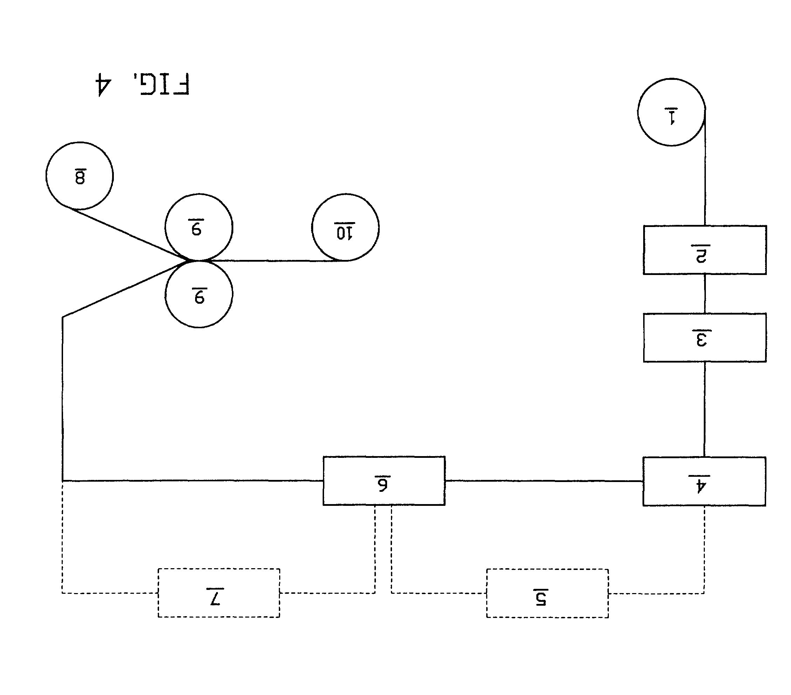

Referring now to Fig. 4 there is shown the wet-on-dry process of making the dry peel label laminate **10** of the present invention.

A first step in the wet-on-dry process is the application of a silicone release coating layer on top of a roll of liner material **1**. This step is called the siliconizing step **2**. Subsequently, the silicone release coating layer is dried and cured in an oven **3**.

After drying of the silicone release coating layer a next step in the wet-on-dry process is the application of a non-PSA layer in a coating device **4** on top of the silicone release coating layer. When a non-PSA emulsion rather than hot melt non-PSA is used the non-PSA layer is subsequently dried in an oven **5**. Then a PSA layer is applied on top of the non-PSA layer in a separate coating device **6**. When a PSA emulsion rather than hot melt PSA is used the PSA layer is dried in an oven **7**.

In a next step the intermediate laminate is further laminated on a roll of face material **8** in a laminating device **9** to yield a roll of the single ply label laminate of the present invention **10**. This single ply label laminate may be used in a second pass through the process to make a double ply label laminate **20** or piggyback.

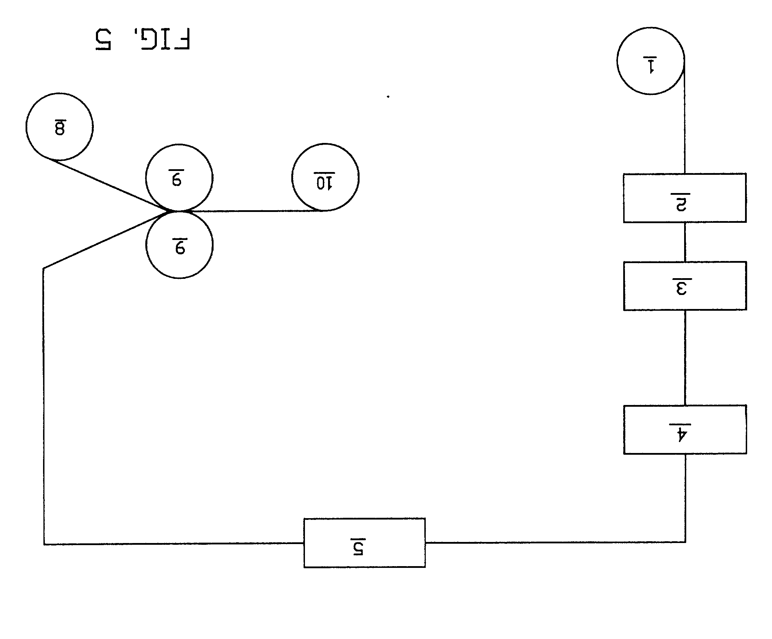

Referring now to Fig. 5 there is shown the wet-on-wet process of making the dry peel label laminate **10** of the present invention.

Application of the silicone release coating layer is performed in the same way as has been described above for the wet-on-dry process.

After drying and curing of the silicone release coating layer a next step is the application of a non-PSA layer and a PSA layer in one step in one coating device **4** (dual die), respectively, on top of the silicone release coating layer through a slot-die process. For a detailed description of the die technology reference is made to US-A 5,728,430 and US-A 5,558,913.

In the wet-on-wet process, the non-PSA layer and the PSA layer are applied as water based emulsions which emulsions have different viscosities to prevent mixing of the non-PSA emulsion with the PSA emulsion. The water based non-PSA emulsion used has a Brookfield viscosity [η] at room temperature in the range of 25 to 1250 mPa·s and preferably in the range of 75 to 500 mPa·s. The water based PSA emulsion used has a Brookfield viscosity [η] at room temperature in the range of 750 to 3500 mPa·s and preferably in the range of 1000 to 1500 mPa·s.

However, when using non-PSA and PSA emulsions in the wet-on-dry process (Fig. 4) the viscosities of these emulsions need not be different because the PSA layer is applied on a dry non-PSA layer and, consequently, mixing between non-PSA and PSA cannot take place.

After application of the non-PSA layer and the PSA layer in the wet-on-wet process both said layers are dried in an oven **5**. Subsequently, the intermediate laminate is further laminated in the same way as has been described above for the wet-on-dry process to yield a roll of the single ply label laminate of the present invention **10.**

The present invention will now be illustrated with reference to the following examples.

### Example 1

A single ply label laminate is made consisting of a face layer, a dry peel adhesive, a silicone release coating layer and a liner layer, successively.

A silicone release coating layer is applied on a paper liner by means of a roll coating device. Next, the silicone release coating layer is thermally cured and dried in an oven. The silicone coatweight of the silicone release coating layer is 0,10 to 0,15 g/m². The silicone release coating layer contains a CRA in the amount of 30 wt.%, with respect to the silicone weight.

In a next step a dry peel adhesive is applied on the first silicone release coating layer by means of a dual die in a coating device. The dry peel adhesive coatweight is 18 to 22 g/m². The dry peel adhesive consists of a PSA layer and a non-PSA layer in a ratio of PSA:non-PSA of about 1:1.

In applying the non-PSA layer a water based emulsion of Neocryl XK-90 (pH = 8,7, Brookfield viscosity at 25°C is 75 mPa·s and solids content is 45 wt.%) is used, available from Zeneca Resins, containing a polymethacrylate that also shows butyl groups in the IR spectrum and which has a T_{g} of 3°C, according to Differential Scanning Calorimetry (DSC). Neocryl XK-90 is a mixture of polybutylacrylate, polymethyl(meth)acrylate and poly(meth)acrylate in the weight ratio of 69:26:5. Neocryl XK-90 also contains an aromatic modified ethylene oxide surfactant. The value of E' after drying of the non-PSA emulsion used is 0,3 x 10⁹ Pa (23°C). In applying the PSA layer a common water based non-resinated acrylic permanent PSA emulsion is used.

Having applied the dry peel adhesive this is dried in an oven. In a next step a face material, a transparent polyester film having a thickness of 50 µm, is laminated on the dry peel adhesive yielding a single ply label laminate. The web speed of the overall process is 50 m/min.

The release force of the single ply label laminate measured at a delamination velocity of 10 m/min and under a delamination angle of 180° is 10 to 20 cN/25 mm.

### Example 2

A piggyback is made consisting of a face layer, a dry peel adhesive, a first silicone release coating layer, a first liner layer, a permanent PSA adhesive, a second silicone release coating layer and a second liner layer, successively.

A first silicone release coating layer is applied on a first paper liner by means of a roll coating device. Next, the silicone release coating layer is thermally cured and dried in an oven. The silicone coatweight of the first silicone release coating layer is 0,01 to 0,1 g/m². The first silicone release coating layer contains a CRA in the amount of 35 wt.%, with respect to the silicone weight.

In a next step a dry peel adhesive is applied on the first silicone release coating layer by means of a dual die in a coating device. In applying the dry peel adhesive the emulsions of Example 1 are used. The dry peel adhesive coatweight is 18 to 22 g/m². The dry peel adhesive consists of a PSA layer and a non-PSA layer in a ratio of PSA:non-PSA of about 1:1.

Having applied the dry peel adhesive this is dried in an oven. In a next step a face material, a thermal paper having a weight of 76 g/m², is laminated on the dry peel adhesive. In this first process pass a single ply label laminate is prepared at a web speed of 50 m/min.

In a second process pass the piggyback is prepared at a web speed of 100 m/min. A first step in this second pass is the application of the second silicone release coating layer on a second paper liner. Subsequently, this second silicone release coating layer is cured and dried in an oven. The silicone coatweight of the second silicone release coating layer is 1,0 to 1,1 g/m².

In a next step a permanent PSA adhesive is applied on the second silicone release coating layer and dried in an oven. Finally the single ply label laminate from the first process pass is laminated on the permanent PSA adhesive yielding a piggyback.

The release force of the piggyback measured at a delamination velocity of 10 m/min and under a delamination angle of 180° is 70 to 80 cN/25 mm.

### Example 3

The compounds and processes of Example 1 are used with the exception of Joncryl eco 2124 (pH = 8,0, Brookfield viscosity at 25°C is 1000 mPa·s and solids content is 47 wt.%), available from Johnson Polymers, containing a polymethacrylate that also shows methyl, butyl and styrene groups in the IR spectrum and which has a T_{g} (DSC) of -35°C, which is used as the non-PSA emulsion, yielding a single ply label laminate.

The release force of the single ply label laminate measured at a delamination velocity of 10 m/min and under a delamination angle of 180° is 15 to 25 cN/25 mm.

### Example 4

The compounds and processes of Example 2 are used with the exception of Joncryl eco 2124 (see Example 3) which is used as the non-PSA emulsion, yielding a piggyback.

The release force of the piggyback measured at a delamination velocity of 10 m/min and under a delamination angle of 180° is 70 to 80 cN/25 mm.

The dry peel label laminates of the present invention may be used as dry tags, coupons, hanger labels, collar labels, exhibition or seminar cards, membership cards, business cards and so on. Two uses, i.e. business cards and coupons, have already been described in the present patent application. For example, the advantage of using the single ply label laminate of the present invention in manufacturing seminar cards is that instead of using stacks of label laminate sheets label laminate rolls may be used. In this way seminar cards can be more easily printed on the spot.

One possible other use not mentioned before is the use of the dry peel label laminates of the present invention as voids. In such use a text, e.g. a warning or secret information, is printed on the silicone release coating layer **4** and after removing of the non-PSA layer **3** this text will appear.

## Claims

1. A dry peel label laminate comprising a face layer (1), a dry peel adhesive (9) and a liner layer (5), successively, said dry peel adhesive comprising a pressure sensitive adhesive layer (2), adjacent to said face layer, and a non-pressure sensitive adhesive layer (3), **characterized in that** said non-pressure sensitive adhesive layer (3) contains one or more polymers and/or copolymers, and/or derivatives of said one or more polymers and/or copolymers, the storage modulus E' of which is greater than 1 x 10⁸ Pa at a temperature in the range of 10 to 30°C, and that between said dry peel adhesive (9) and said liner layer (5) a silicone release coating layer (4) is present.

2. A dry peel label laminate according to claim 1, wherein said one or more polymers are selected from the group consisting of poly(meth)acrylates, polyesters, polypropylene, polyamides, polyurethanes and vinylic polymers.

3. A dry peel label laminate according to claim 2, wherein said one or more polymers are selected from the group consisting of poly(meth)acrylates, polyurethanes and vinylic polymers.

4. A dry peel label laminate according to claim 3, wherein said one or more polymers comprise poly(meth)acrylates.

5. A dry peel label laminate according to any of the preceding claims, wherein the silicone weight per surface area unit in the silicone release coating layer (4) is comprised within the range of 0.01 to 1.00 g/m².

6. A dry peel label laminate according to any of the preceding claims, wherein said silicone release coating layer (4) comprises a control release agent in a weight per surface area unit up to 100 wt.%, with respect to the silicone weight per surface area unit.

7. A dry peel label laminate according to any of the preceding claims, wherein said face layer (1) is made of a material selected from the group consisting of paper and plastic film.

8. A dry peel label laminate according to claim 7, wherein said plastic film is made of a polymer selected from the group consisting of polyolefins and polyesters.

9. A dry peel label laminate comprising a face layer (1), a pressure sensitive adhesive layer (2), a non-pressure sensitive adhesive layer (3), a silicone release coating layer (4) and a liner layer (5) according to any of the preceding claims, further comprising a pressure sensitive adhesive layer (6), adjacent to said liner layer (5), a silicone release coating layer (7) and a liner layer (8), successively.

10. A process of making a dry peel label laminate according to any of the preceding claims, comprising application of a non-pressure sensitive adhesive and application of a pressure sensitive adhesive, successively, on a silicone release coating layer of a label laminate comprising said silicone release coating layer (4) and said liner layer (5).

11. A process of making a dry peel label laminate according to the claims 3-9, comprising application of a non-pressure sensitive adhesive emulsion and application of a pressure sensitive adhesive emulsion, successively, on a silicone release coating layer of a label laminate comprising said silicone release coating layer (4) and said liner layer (5).

12. A process according to claim 10 or 11, wherein said non-pressure sensitive adhesive and said pressure sensitive adhesive are applied in two steps in two separate devices.

13. A process according to claim 12, wherein said two steps are mediated by a drying step.

14. A process according to claim 13, wherein said drying step is carried out in an oven.

15. A process according to claim 11, wherein application of said non-pressure sensitive adhesive emulsion and application of said pressure sensitive adhesive emulsion are carried out in one step in one device.

16. A process according to claim 15, wherein said device is a dual die.

17. A process according to any of the claims 10 to 16, wherein a label laminate, comprising said liner layer (5), said silicone release coating layer (4), said non-pressure sensitive adhesive layer (3) and said pressure sensitive adhesive layer (2), is laminated with a face layer on said pressure sensitive adhesive layer (2).

18. A process according to claim 17, wherein said lamination with a face material is preceded by a drying step.

19. A process according to claim 18, wherein said drying step is carried out in an oven.
